# EUROPÄISCHE PATENTANMELDUNG

(11) **EP 3 992 590 A1**
(43) Veröffentlichungstag der Anmeldung: **04.05.2022**
(21) Anmeldenummer: 20204203.2
(22) Anmeldetag: 27.10.2020
(51) Int. Cl.: G01F 1/84, G01F 15/00

(54) **CORIOLIS-DURCHFLUSSMESSGERÄT UND VERFAHREN ZU SEINER HERSTELLUNG**

(71) Anmelder: Heinrichs Messtechnik GmbH, 50739 Köln (DE)
(72) Erfinder: CHATZIKONSTANTINOU, Thomas, 52062 Aachen (DE)
(74) Vertreter: Naeven, Ralf

(57) **Zusammenfassung**

Ein Coriolis-Durchflussmessgerät, aufweisend ein Messgerätgehäuse (2) mit Anschlussbereichen (3, 4) zum Anschluss an eine Fluidleitung, ein ein Messrohrmaterial aufweisendes Messrohr (7, 8), in mindestens einem der Anschlussbereiche (3, 4) ein einen Messrohrendbereich mit radialem Abstand umgebendes Anschlussteil (16, 17), welches ein vom Messrohrmaterial verschiedenes Anschlussteilmaterial aufweist, ein das Anschlussteil (16, 17) an seiner im Anschlussfall der Fluidleitung zugewandten Außenseite zumindest zum Teil abdeckendes Abdeckelement (18, 19), welches zumindest zum Teil ein vom Flanschmaterial verschiedenes Abdeckelementmaterial aufweist, wobei das Abdeckelement (18, 19) mit dem Messrohr (7, 8) fluiddicht verbunden ist, kennzeichnet sich dadurch, dass zwischen Messrohrendbereich und Anschlussteil (16, 17) ein das Messrohr (7, 8) vollständig umlaufender Zwischenraum (21) verbleibt und der Zwischenraum (21) von Festkörpermaterial frei ist oder ein schwingungsdämpfendes Material mit Festkörpereigenschaften aufweist.

Außerdem wird ein Verfahren zur Herstellung eines Coriolis-Durchflussmessgerätes vorgestellt.

## Beschreibung

Die Erfindung betrifft ein Coriolis-Durchflussmessgerät gemäß dem Oberbegriff des Anspruchs 1 sowie ein Verfahren zur Herstellung eines Coriolis-Durchflussmessgerätes.

Vorrichtungen zur Coriolis-Durchflussmessung sind aus dem Stand der Technik hinreichend bekannt (siehe zum Beispiel DE 20 2017 006 709 U1) und werden insbesondere eingesetzt, den Massendurchsatz und/oder die Dichte eines durchfließenden Fluids zu bestimmen. Coriolis-Durchflussmessgeräte weisen in einem Messwandler mindestens ein Messrohr auf, welches von dem Fluid, dessen Massendurchsatz und/oder Dichte bestimmt werden soll, durchflossen wird. Mittels eines Schwingungserregers wird das mindestens eine Messrohr in Schwingungen versetzt, während gleichzeitig an voneinander getrennten Messstellen die Schwingungen des Messrohres mittels Schwingungssensoren gemessen werden. Fließt während der Messung kein Fluid durch das Messrohr hindurch oder ruht das Fluid darin, schwingt das Messrohr an beiden Messstellen mit gleicher Phase. Bei durchfließendem Fluid hingegen kommt es an den beiden Messstellen aufgrund von auftretenden Corioliskräften zu Phasenverschiebungen, die ein direktes Maß für den Massendurchsatz, d. h. für die pro Zeiteinheit durchfließende Masse des Fluids, durch das betroffene Messrohr sind. Zudem ist die Eigenfrequenz des Messrohres an den Messstellen direkt von der Dichte des durchfließenden Fluids abhängig, sodass dessen Dichte ebenfalls bestimmt werden kann.

Zumeist werden Gehäuse und Messrohr(e) von Coriolis-Durchflussmessgeräten aus Edelstahl hergestellt. Für aggressive Fluide, wie zum Beispiel Säuren, ist Edelstahl jedoch als Material für die Kontaktflächen mit dem Fluid nicht geeignet. In derartigen Fällen werden besondere, für die gegebenen Bedingungen geeignetere Materialien für das Messrohr oder die Messrohre eingesetzt, zum Beispiel Tantal. Aus Kostengründen wird es jedoch vermieden, das Gehäuse oder auch nur Teile des Anschlussbereiches ebenfalls aus dem Material des Messrohres oder der Messrohre zu fertigen.

Säurebeständige Materialien, wie z.B. Tantal, können im Vergleich zu kostengünstigeren oder leichter zu verarbeitenden Materialien, zum Beispiel Edelstahl, deutlich höhere Schmelztemperaturen aufweisen, so dass eine hinreichende Verbindung zwischen dem Messrohr und dem Messgerätgehäuse oftmals nicht über eine Schweißverbindung, sondern lediglich über Lötprozesse, Kleben oder Formschluss hergestellt werden können.

Problematisch ist, dass im Bereich des Übergangs von der Fluidleitung zum Messrohr der Kontakt des aggressiven Fluids mit gegen das Fluid nichtresistenten Materialien des Messgerätgehäuses zu vermeiden ist. Aufgrund dessen wird gemäß dem Stand der Technik üblicherweise ein im Anschlussbereich befindliches Anschlussteil, z.B. ein Flansch, mit einem Abdeckelement aus gegen das Fluid resistentem Material ausgekleidet, welches mit dem Messrohr verschweißt werden kann.

Im Stand der Technik ist es vorgesehen, das Messrohr im Anschlussbereich am Gehäuse abzustützen, um dem gegebenenfalls hohen Fluiddruck standhalten zu können, aber auch um einer Knickgefahr des Messrohres entgegenzuwirken.

Aus der DE 102 33 307 A1 ist ein Coriolis-Durchflussmessgerät der eingangs genannten Art bekannt, welches ein Messrohr aus Titan und ein im Anschlussbereich am Messrohr angeschweißtes Abdeckelement, ebenfalls aus Titan, aufweist. Das Titan-Messrohr ist im Anschlussbereich mittels eines Zwischenrings gegen das Messgerätgehäuse aus Stahl abgestützt.

Es ist auch bekannt, Messrohre am umgebenden Material des Messgerätgehäuses anzurollen, d. h. mittels eines speziellen Anrollwerkzeuges mechanisch aufzuweiten und gegen eine umgebende Durchführung im Anschlussbereich, zum Beispiel im Flansch, zu pressen. Um eine zusätzliche Fixierung des Messrohres zu erhalten, kann zusätzlich ein Formschluss zwischen dem Messrohr und dem umgebenden Material des Messgerätgehäuses vorgesehen werden, zum Beispiel durch Rillen im umgebenden Material des Messgerätgehäuses, gegen die das Messrohr angerollt wird. Diese Technik kann jedoch nachteilig sein. So kann durch das Anrollen das Messrohr aufgrund von Rissbildung beschädigt werden. Zudem kann in der Regel nicht gewährleistet werden, dass die durch das Anrollen entstehende, im Wesentlichen formschlüssige Verbindung zwischen Messrohr und umgebendem Material des Anschlussbereiches immer die gewünschte hinreichende Qualität aufweist. So wird mitunter die gewünschte Flächenpressung nicht erreicht, was zu einer nicht hinreichenden Fixierung des Messrohres führen kann. In der Folge können die Nullpunktstabilität, die Messgenauigkeit und Wiederholbarkeit von Messungen negativ beeinflusst werden.

In der DE 10 2006 013 601 A1 sind sowohl das Anrollen des Messrohres am umgebenden Material des Messgerätgehäuse als auch eine stoffschlüssige Verbindung kritisiert. Stattdessen werden dort Schraubverbindungen vorgeschlagen. Diese Druckschrift geht allerdings offensichtlich von Stählen als Material sowohl für das Gehäuse als auch für das Messrohr aus, sodass die dort offenbarten Coriolis-Durchflussmessgeräte nicht für den Einsatz bei gegen Stahl aggressiven Fluiden geeignet sind.

Aus der DE 100 03 784 B4 ist ein Coriolis-Durchflussmessgerät bekannt, welches ein gerades Messrohr aus Keramik aufweist, wobei das Keramikmessrohr im Bereich eines Flansches zum umgebenden Stahlgehäuse mit einem metallischen Ring abgestützt ist. Dieser metallische Ring ist auf dem Messrohr aufgecrimpt und mit dem Stahlgehäuse verschweißt.

Der vorliegenden Erfindung liegt das technische Problem zugrunde, ein Coriolis-Durchflussmessgerät der eingangs genannten Art sowie ein Verfahren zu seiner Herstellung mit einem alternativen Aufbau zur Verfügung zu stellen, mit dem auch bei unterschiedlichen Materialien des Messrohres und des umgebenden Anschlussbereichs des Messgerätgehäuses das Messrohr im Anschlussbereich eine verbesserte Messgenauigkeit ermöglicht wird.

Dieses technische Problem wird bei einem Coriolis-Durchflussmessgerät der eingangs genannten Art mit den kennzeichnenden Merkmalen des Anspruchs 1 und bei einem Verfahren der eingangs genannten Art mit den Merkmalen des Anspruchs 9 gelöst. Bevorzugte Ausführungsbeispiele für das erfindungsgemäße Coriolis-Durchflussmessgerät sowie für das Verfahren ergeben sich aus den abhängigen Ansprüchen.

Sofern die diesseitige Erfindung im Folgenden der Einfachheit halber anhand der Verbindung eines Messrohres mit einem der Anschlussbereiche eines Messgerätgehäuses dargestellt wird, stellt dies keine Einschränkung auf Coriolis-Durchflussmessgeräte mit nur einem Messrohr dar. Selbstverständlich gilt das Gesagte in entsprechender Weise im Zusammenhang mit einem eine Mehrzahl von Messrohren aufweisenden Coriolis-Durchflussmessgerät. Die Erfindung kann somit in mindestens einem der Anschlussbereiche und an mindestens einem der Messrohre verwirklicht sein. Die Erfindung umfasst somit alle Varianten und insbesondere auch die, dass die Erfindung an allen Anschlussbereichen und an allen Messrohren oder mit einer Teilanzahl hiervon verwirklicht ist.

Die Erfindung geht aus von einem Coriolis-Durchflussmessgerät, welches ein Messgerätgehäuse mit Anschlussbereichen zum Anschluss an eine Fluidleitung und ein ein Messrohrmaterial aufweisendes Messrohr umfasst. Dabei weist in mindestens einem der Anschlussbereiche ein Anschlussteil ein Anschlussteilmaterial auf, welches vom Messrohrmaterial verschieden ist. Dieses Anschlussteil umgibt das Messrohr in einem Messrohrendbereich mit einem radialen Abstand. Das Anschlussteil ist an seiner im Anschlussfall der Fluidleitung zugewandten Außenseite zumindest zum Teil mit einem Abdeckelement abgedeckt, welches zumindest zum Teil ein vom Flanschmaterial verschiedenes Abdeckelementmaterial aufweist. Das Abdeckelement ist mit dem Messrohr fluiddicht verbunden. Erfindungsgemäß verbleibt zwischen Messrohrendbereich und Anschlussteil ein das Messrohr vollständig umlaufender Zwischenraum, welcher von Festkörpern frei ist oder ein schwingungsdämpfendes Material aufweist.

Der von Festkörpern freie Zwischenraum zwischen dem Messrohr und dem Anschlussteil, welches zum Beispiel ein Flansch sein kann, bewirkt, dass eine Beschädigung des Messrohres durch den Kontakt mit dem Anschlussteil, zum Beispiel durch ein Anrollen, vermieden wird. Vermieden werden des Weiteren ungewollte Wechselwirkungen zwischen dem Messrohr und dem Anschlussteil oder einem zwischen Messrohr und Anschlussteil eingefügten Element. Eine weitgehend gleiche Wirkung kann erzielt werden, wenn der Zwischenraum ein schwingungsdämpfendes Material mit Festkörpereigenschaften aufweist. Ein solches schwingungsdämpfendes Material kann zum Beispiel elastisch, flexibel oder viskoelastisch sein, zum Beispiel ein Elastomer und/oder ein elastischer Schaum oder eine entsprechende Eigenschaften aufweisende Kombination von Materialien.

An seiner im Anschlussfall der Fluidleitung zugewandten Außenseite ist das Anschlussteil zumindest zum Teil von einem Abdeckelement, welches zumindest zum Teil ein vom Flanschmaterial verschiedenes Abdeckelementmaterial aufweist, abgedeckt. Das Abdeckelementmaterial ist so ausgewählt, dass es für einen Kontakt mit dem Fluid geeignet ist. Vorzugsweise besteht das Abdeckelement aus demselben Material wie das Messrohr. Durch die fluiddichte Verbindung zwischen Abdeckelement und Messrohr ist gewährleistet, dass das Fluid, welches durch das Coriolis-Durchflussmessgerät geleitet wird, nicht in das Gehäuseinnere außerhalb des Messrohres oder der Messrohre gelangt.

Dabei kann es insbesondere vorteilhaft sein, dass das Messrohr mit dem Abdeckelement stoffschlüssig verbunden ist. Diese stoffschlüssige Verbindung, die vorzugsweise vollumfänglich am Ende des Messrohres gegeben ist, sorgt für eine Fixierungsstelle des Messrohres. Das Abdeckelement selbst kann am Anschlussteil formschlüssig oder stoffschlüssig fixiert sein. Eine formschlüssige Fixierung kann zum Beispiel durch eine Verschraubung oder eine Bördelung gegeben sein, eine stoffschlüssige Fixierung zum Beispiel mittels Schweißens, Klebens oder Lötens, zum Beispiel mittels einer Lötung unter Einsatz von Silber als Lötmaterial.

Die Erfindung ist mit unterschiedlichsten Materialkombinationen denkbar. Für die Anwendung des Coriolis-Durchflussmessgeräts im Zusammenhang mit aggressiven Fluiden sind entsprechende resistente Materialien für das Abdeckelement und das Messrohr zu wählen, zum Beispiel Tantal sowohl für das Abdeckelement als auch für das Messrohr. Messrohr und Abdeckelement können auch aus unterschiedlichen Materialien bestehen, wobei eine beständige, vorzugsweise fluiddichte Verbindung realisiert werden sollte. Bei geeigneten Fluiden können Messrohr und/oder Abdeckelement auch aus Edelstahl, zum Beispiel Edelstahl 1.4404 oder Hastelloy^{®}, gefertigt sein. Bei einem Messrohr und/oder Abdeckelement aus einem Edelstahl könnte das Anschlussteil zum Beispiel aus einem anderen Metall oder Kunststoff oder einer Keramik bestehen. Auch Messrohr und/oder Abdeckelement können aus Keramik gefertigt sein. Es können auch mehr als zwei Materialien involviert sein, z.B. ein Anschlussteil aus einem ersten Material, ein Gehäuse aus einem zweiten Material, ein Messrohr aus einem dritten Material.

Das erfindungsgemäße Coriolis-Durchflussmessgerät kann auch so ausgebildet sein, dass das Messrohr durch ein das Messrohr zumindest auf einem Teilumfang umgebendes Messrohr-Stützelement hindurchgeführt und daran fixiert ist, wobei das Messrohr-Stützelement auf mindestens 10 % seines Umfanges, vorzugsweise mindestens 20 % seines Umfanges, weiter vorzugsweise im Wesentlichen vollumfänglich stoffschlüssig mit dem Messgerätgehäuse verbunden ist.

Das Messrohr-Stützelement sorgt für eine zusätzliche Stütze für das Messrohr und erhöht somit die Stabilität der Konstruktion, insbesondere der Fixierung des Messrohres im Anschlussbereich des Messgerätes. Hierfür kann das Messrohr-Stützelement in einem in Längsrichtung des Messrohres gesehen geeigneten Abstand zur Verbindungsstelle mit dem Abdeckelement am Messgerätgehäuse fixiert sein. Der optimale Abstand kann zum Beispiel von der Stärke der Messrohrwand, dem Durchmesser des Messrohres, der Stärke des Abdeckelements und den verwendeten Materialien sowie vom zu erwartenden Fluiddruck abhängen.

Im Bereich der Fixierung des Messrohres am Abdeckelement kann es, insbesondere im Fall einer stoffschlüssigen Verbindung zwischen Messrohr und Abdeckelement, sinnvoll oder notwendig sein, am Anschlussteil im Bereich der stoffschlüssige Verbindung zwischen Messrohr und Abdeckelement eine Abfasung vorzusehen, sodass ein Teil des Abdeckelements bei anstehendem Fluiddruck sich nicht am Anschlussteil abstützen kann. Die Größe des über die Abfasung ragenden Teils des Abdeckelements kann ebenfalls Einfluss auf die Stabilität der Konstruktion und damit auf den optimalen Abstand zwischen Abdeckelement und Stützelement haben. Geeignete geometrische Parameter können analytisch oder vorzugsweise über eine geeignete Simulation ermittelt werden.

Stützelemente sind im Allgemeinen auch aus dem Stand der Technik bekannt. Diese Stützelemente sind dabei innerhalb eines rohrförmigen Abschnitts des Messgerätgehäuses angeordnet und können aufgrund dieser Geometrie nicht über den gesamten Umfang durchgehend angeschweißt oder angelötet werden, sondern sind an einzelnen Stellen punktuell durch eine Schweißung fixiert. Für die im Stand der Technik bekannte Fixierung kann das Messgerätgehäuse von außen bis zum Umfang des Stützelements durchbohrt werden, um anschließend die stoffschlüssige Verbindung durch die Bohrung hindurch herzustellen, wobei Zusatzmaterial für den Lötprozess oder den Schweißprozess in die Bohrung hineingegeben wird.

Gemäß der Erfindung ist das Messrohr vom Stützelement umgeben und z.B. durch Presspassung oder vorzugsweise stoffschlüssig, zum Beispiel durch Lötung, Schweißen oder Kleben, und vorzugsweise vollumfänglich am Stützelement fixiert.

Das Stützelement kann ein Verbindungselement zwischen dem zugehörigen Anschlussbereich, zum Beispiel einem Flansch des Messgerätgehäuses und dem Rest des Messgerätgehäuses sein.

Die Erfindung ist nicht beschränkt auf Coriolis-Durchflussmessgeräte, die mit besonders aggressiven Fluiden betrieben werden. Die Erfindung betrifft generell Coriolis-Durchflussmessgeräte, bei denen Messrohr(e) und Messgerätgehäuse zumindest im Anschlussbereich unterschiedliche Materialien aufweisen. Derartige Mehrmaterialausführungen können zum Beispiel auch mit einem Edelstahl aufweisenden Messrohr und einem Kunststoff aufweisenden Gehäuse gebildet sein.

Im Folgenden werden anhand von Figuren beispielhafte Ausführungsformen des erfindungsgemäßen Coriolis-Durchflussmessgerätes sowie des Verfahrens zu seiner Herstellung erläutert.

Es zeigt schematisch:
- Fig. 1:: ein Coriolis-Durchflussmessgerät in einem perspektivischen Schnitt,
- Fig. 2:: einen vergrößerten Ausschnitt aus Fig. 1 mit an einem Abdeckelement angeschweißten Messrohr,
- Fig. 3:: das am Abdeckelement angeschweißte Ende des Messrohres im Querschnitt und
- Fig. 4:: im Querschnitt ein Anschlussbereich des Coriolis-Durchflussmessgeräts mit Flansch und Stützelement.

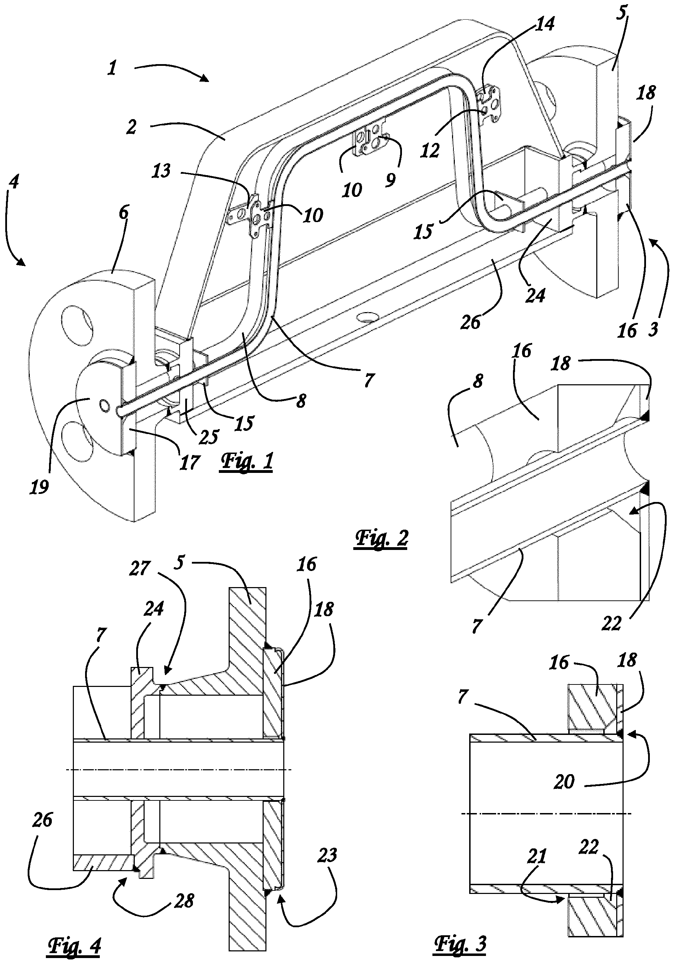

Fig. 1 zeigt schematisch in einer perspektivischen Schnittdarstellung ein Coriolis-Durchflussmessgerät 1 mit einem Messgerätgehäuse 2 und einem ersten Anschlussbereich 3 und einem zweiten Anschlussbereich 4 für den Anschluss des Coriolis-Durchflussmessgerätes 1 an eine hier nicht dargestellte Fluidleitung. Der erste Anschlussbereich 3 weist einen ersten Flansch 5 und der zweite Anschlussbereich 4 einen zweiten Flansch 6 auf, die jeweils für die Verbindung mit einem hier nicht gezeigten passenden Gegenstück der Fluidleitung dienen. Ein erstes Messrohr 7, welches hier geschnitten dargestellt ist, und ein zweites Messrohr 8 führen das Fluid, von dem z.B. der Massendurchfluss festgestellt werden soll, durch das Coriolis-Durchflussmessgerät 1. Die Messrohre 7 und 8 werden mittels eines hier nicht dargestellten Schwingungserregers zu Schwingungen angeregt. Dargestellt sind in Fig. 1 lediglich ein am ersten Messrohr 7 fixierter erster Erregungsüberträger 9 und ein am zweiten Messrohr 8 fixierter zweiter Erregungsüberträger 10, mit denen die Schwingungsanregungen des nicht dargestellten Schwingungsanregers auf das zugehörige Messrohr 7 bzw. 8 übertragen werden. Am ersten Messrohr 7 sind ein erster Schwingungsüberträger 11 und ein zweiter Schwingungsüberträger 12 fixiert, mit denen Schwingungen des ersten Messrohres 7 an jeweils einen hier nicht dargestellten Schwingungssensor übertragen werden. In gleicher Weise sind ein dritter Schwingungsüberträger 13 und ein vierter Schwingungsüberträger 14 am zweiten Messrohr 8 fixiert, um Schwingungen zum zugehörigen, hier nicht dargestellten Schwingungssensor zu übertragen. Entsprechend dem Messprinzip der Coriolis-Durchflussmessung sind festzustellende Phasendifferenzen in den Schwingungen insbesondere vom Massendurchsatz des Fluids durch das betroffene Messrohr 7 und 8 abhängig. An den Messrohren 7 und 8 sind optionale Knotenbleche 15 angeordnet, die - aus dem Stand der Technik bekannt - zur Verbesserung der Nullpunktstabilität dienen. Die Knotenbleche 15 verbinden die Messrohre 7 und 8 derart miteinander, dass die relative Lage der Messrohre 7 und 8 im Bereich der Knotenbleche 15 zueinander fixiert bleibt.

Im Folgenden werden die Anschlussbereiche 3 und 4 in ihrem Aufbau näher betrachtet. Die Fig. 2 bis 4 stellen ausschnittsweise den ersten Anschlussbereich 3 in verschiedenen Ansichten dar. Der zweite Anschlussbereich 4 ist entsprechend aufgebaut. Unterschiedliche Gestaltungen der beiden Anschlussbereiche 3 und 4 sind allerdings ebenfalls denkbar. Am ersten Flansch 5 ist ein erstes Anschlussteil 16 und am zweiten Flansch 4 ein zweites Anschlussteil 17 fixiert. In der Darstellung der Fig. 1 und 4 sind die Anschlussteile 16 und 17 jeweils stoffschlüssig, z. B. durch Schweißen, am zugehörigen Flansch 3 bzw. 4 fixiert. Die Anschlussteile 16 und 17 können auch einstückig mit dem zugehörigen Flansch 3 bzw. 4 sein.

Das erste Anschlussteil 16 ist mit einem ersten Abdeckelement 18 und das zweite Anschlussteil 17 mit einem zweiten Abdeckelement 19 abgedeckt. Das Abdeckelement 18 oder 19 kann beispielsweise dazu dienen, das damit abgedeckte Anschlussteil 16 bzw. 17 zu schützen, z. B. vor einem gegenüber dem Material des Anschlussteils 16 oder 17 aggressiven Fluid. Im vorliegenden Beispiel mit zwei Messrohren 7 und 8 kann das Abdeckelement 18 oder 19 für das aus der nicht dargestellten Fluidleitung in das Coriolis-Durchflussmessgerät 1 eintretende Fluid gleichzeitig als Strömungsteiler dienen.

Das Messrohr 7 ist mit den Abdeckelementen 18 und 19 fluiddicht verbunden. Diese Verbindung ist in den Figuren beispielhaft als stoffschlüssige Verbindung, z.B. als Schweißverbindung, dargestellt. Andere Verbindungsarten, wie Löten und Formschluss, z. B. über ein Gewinde, sind ebenfalls denkbar. Eine Schweißverbindung bietet sich insbesondere dann an, wenn das Abdeckelement 18 oder 19 aus denselben oder aus für Schweißprozesse kompatiblen Materialien bestehen. Für aggressive Fluide könnte z.B. Tantal als Material für die Messrohre 7 oder 8 und die Abdeckelemente 18 oder 19 geeignet sein. Weitere denkbare Materialkombinationen für die dargestellte Ausführungsform des Coriolis-Durchflussmessgerätes 1 sind in der Beschreibungseinleitung genannt.

Fig. 3 zeigt im Querschnitt das vordere Ende des ersten Messrohres 7, welches stoffschlüssig über eine Schweißnaht 20 mit dem ersten Abdeckelement 18 verbunden ist. Das Abdeckelement 18 und das damit abgedeckte erste Anschlussteil 16 sind nur ausschnittsweise dargestellt. Zwischen dem ersten Anschlussteil 16 und dem ersten Messrohr 7 besteht ein Zwischenraum 21, der von Festkörpermaterial frei ist. Der vom Anschlussteil 16 umgebene Bereich des Messrohres 7 ist auch als Messrohrendbereich bezeichnet. Alternativ kann in dem Zwischenraum 21, diesen gänzlich oder nur zum Teil ausfüllend, ein stark schwingungsdämpfendes Material vorhanden sein, z.B. ein Elastomer, ein Viskoelastomer, ein Harz oder ein Schaumstoff. Der Zwischenraum 21 umfasst im dargestellten Beispiel eine optionale Fase 22 (siehe auch Fig. 2), die für einen Schweißprozess zwischen Messrohr 7 und Abdeckelement 18 vorteilhaft ist. Vorzugsweise, jedoch nicht zwingend, hat das erste Messrohr 7 keinerlei unmittelbaren Kontakt zum ersten Anschlussteil 16.

Fig. 4 zeigt im Querschnitt den vollständigen ersten Flansch 5 mit dem angeschweißten ersten Anschlussteil 16 und dem das Anschlussteil 16 abdeckenden ersten Abdeckelement 18. Das Abdeckelement 18 ist über eine Bördelung 23 am Anschlussteil 16 fixiert. Alternativ kann die Verbindung auch in anderer Weise formschlüssig oder stoffschlüssig, z. B. durch einen Schweiß- oder Lötprozess erfolgen. Anschlussteil 16 und Abdeckelement 18 bestehen aus unterschiedlichen Materialien, beispielsweise kann das Abdeckelement 18 Tantal aufweisen und das Anschlussteil 16 einen Edelstahl. Eine Lötung kann z.B. mittels Silbers als Lötmaterial erfolgen.

Mit dem ersten Flansch 5 ist ein erstes Stützelement 24 und mit dem zweiten Flansch 6 ein zweites Stützelement 25 stoffschlüssig verbunden (siehe Fig. 1). Zum Stoffschluss alternative Verbindungsweisen sind ebenfalls möglich. Es ist auch denkbar zumindest eines der Stützelemente 24 und 25 mit dem zugehörigen Flansch 5 bzw. 6 einstückig auszubilden. In der Querschnittzeichnung der Fig. 4 ist das erste Stützelement 24 deutlicher dargestellt mit einer Fügenaht 27 zwischen Stützelement 24 und Flansch 5. Beide Messrohre 7 und 8 des dargestellten Beispiels sind durch die Stützelemente 24 und 25 hindurchgeführt und daran fixiert, z. B. durch eine stoffschlüssige Verbindung oder eine Presspassung.

Die Stützelemente 24 und 25 sind mit dem Messgerätgehäuse 2 durch eine linienförmige und stoffschlüssige Verbindung, z.B. durch Schweißen oder Löten, miteinander verbunden. Die linienförmige Verbindung, z.B. mit einer linienförmig ausgedehnten Schweißnaht oder Lötnaht, steht im Gegensatz zur punktweisen stoffschlüssigen Verbindung gemäß dem Stand der Technik. Vorzugsweise besteht die stoffschlüssige Verbindung zwischen Stützelement 24 oder 25 und dem Messgerätgehäuse 2 vollumfänglich oder nahezu vollumfänglich. In Fig. 4 ist eine zwischen dem Messgerätgehäuse 2 und dem Stützelement 24 gegebene vorzugsweise vollumfängliche oder nahezu vollumfängliche Fügenaht 28 lediglich zwischen Stützelement 24 und dem Messgerätgehäuseboden 26 zu sehen.

Das dargestellte Coriolis-Durchflussmessgerät 1 kann alternativ in entsprechender Weise auch mit nur einem Messrohr oder mit mehr als zwei Messrohren ausgeführt werden.

### Bezugszeichenliste

- 1: Coriolis-Durchflussmessgerät
- 2: Messgerätgehäuse
- 3: Erster Anschlussbereich
- 4: Zweiter Anschlussbereich
- 5: Erster Flansch
- 6: Zweiter Flansch
- 7: Erstes Messrohr
- 8: Zweites Messrohr
- 9: Erster Erregungsüberträger
- 10: Zweiter Erregungsüberträger
- 11: Erster Schwingungsüberträger
- 12: Zweiter Schwingungsüberträger
- 13: Dritter Schwingungsüberträger
- 14: Vierter Schwingungsüberträger
- 15: Knotenblech
- 16: Erstes Anschlussteil
- 17: Zweites Anschlussteil
- 18: Erstes Abdeckelement
- 19: Zweites Abdeckelement
- 20: Schweißnaht
- 21: Zwischenraum
- 22: Fase
- 23: Bördelung
- 24: Erstes Stützelement
- 25: Zweites Stützelement
- 26: Messgerätgehäuseboden
- 27: Fügenaht
- 28: Fügenaht

## Patentansprüche

1. Coriolis-Durchflussmessgerät, aufweisend
ein Messgerätgehäuse (2) mit Anschlussbereichen (3, 4) zum Anschluss an eine Fluidleitung,
ein ein Messrohrmaterial aufweisendes Messrohr (7, 8),
in mindestens einem der Anschlussbereiche (3, 4) ein einen Messrohrendbereich mit radialem Abstand umgebendes Anschlussteil (16, 17), welches ein vom Messrohrmaterial verschiedenes Anschlussteilmaterial aufweist,
ein das Anschlussteil (16, 17) an seiner im Anschlussfall der Fluidleitung zugewandten Außenseite zumindest zum Teil abdeckendes Abdeckelement (18, 19), welches zumindest zum Teil ein vom Flanschmaterial verschiedenes Abdeckelementmaterial aufweist,
wobei das Abdeckelement (18, 19) mit dem Messrohr (7, 8) fluiddicht verbunden ist, **dadurch gekennzeichnet, dass**
zwischen Messrohrendbereich und Anschlussteil (16, 17) ein das Messrohr (7, 8) vollständig umlaufender Zwischenraum (21) verbleibt und der Zwischenraum (21) von Festkörpermaterial frei ist oder ein schwingungsdämpfendes Material mit Festkörpereigenschaften aufweist.

2. Coriolis-Durchflussmessgerät nach Anspruch 1, **dadurch gekennzeichnet, dass** das Messrohr (7, 8) mit dem Abdeckelement (18, 19) stoffschlüssig verbunden ist.

3. Coriolis-Durchflussmessgerät nach Anspruch 1, **dadurch gekennzeichnet, dass** das Messrohr (7, 8) mit dem Abdeckelement (18, 19) formschlüssig verbunden ist.

4. Coriolis-Durchflussmessgerät nach einem der vorhergehenden Ansprüche, **dadurch gekennzeichnet, dass** das Messrohrmaterial Tantal aufweist.

5. Coriolis-Durchflussmessgerät nach einem der vorhergehenden Ansprüche, **dadurch gekennzeichnet, dass** das Abdeckelement (18, 19) Tantal aufweist.

6. Coriolis-Durchflussmessgerät nach einem der vorhergehenden Ansprüche, **dadurch gekennzeichnet, dass** das Anschlussteilmaterial einen Stahl, insbesondere Edelstahl, aufweist.

7. Coriolis-Durchflussmessgerät nach einem der vorhergehenden Ansprüche, **dadurch gekennzeichnet, dass**
das Messrohr (7, 8) durch ein das Messrohr (7, 8) zumindest auf einem Teilumfang umgebendes Messrohr-Stützelement (24, 25) hindurchgeführt und daran fixiert ist, wobei das Messrohr-Stützelement (24, 25) auf mindestens 10 % seines Umfanges, vorzugsweise mindestens 20 % seines Umfanges, weiter vorzugsweise im Wesentlichen vollumfänglich stoffschlüssig mit dem Messgerätgehäuse (2) verbunden ist.

8. Coriolis-Durchflussmessgerät nach Anspruch 7, **dadurch gekennzeichnet, dass** das Messrohr-Stützelement (24, 25) mittels mindesten einer linienförmigen Verbindung mit dem Messgerätgehäuse (2) verbunden ist.

9. Verfahren zur Herstellung eines Coriolis-Durchflussmessgerätes, bei dem
a) ein ein Messrohrmaterial aufweisendes Messrohr (7, 8) an einem zum Anschluss an eine Fluidleitung vorgesehenen Anschlussbereich (3, 4) eines Messgerätgehäuses (2) fixiert wird, wobei ein ein Anschlussteilmaterial aufweisendes Anschlussteil (16, 17) des Anschlussbereichs (3, 4) zumindest zum Teil von einem ein Abdeckelementmaterial aufweisendes Abdeckelement (18, 19) abgedeckt wird, wobei ein vom Messrohrmaterial und vom Abdeckelementmaterial verschiedenes Anschlussteilmaterial verwendet wird, und
b) das durch das Anschlussteil (16, 17) hindurchgeführte Messrohr (7, 8) mit dem Abdeckelement (18, 19) fluiddicht derart verbunden wird, dass zwischen einem Messrohrendbereich und dem vorderen Anschlussteil (16, 17) ein den Messrohrendbereich vollständig umlaufender Zwischenraum (21) verbleibt, welcher von Festkörpermaterial frei ist oder ein schwingungsdämpfendes Material mit Festkörpereigenschaften aufweist.

10. Verfahren nach Anspruch 9, **dadurch gekennzeichnet, dass** das Messrohr (7, 8) mit dem Abdeckelement (18, 19) stoffschlüssig verbunden wird.

11. Verfahren nach Anspruch 9, **dadurch gekennzeichnet, dass** das Messrohr (7, 8) mit dem Abdeckelement (18, 19) formschlüssig verbunden wird.

12. Verfahren nach einem der Ansprüche 9 bis 11, **dadurch gekennzeichnet, dass** das Messrohr (7, 8) zumindest auch aus Tantal gefertigt wird.

13. Verfahren nach einem der Ansprüche 9 bis 12, **dadurch gekennzeichnet, dass** das Abdeckelement (18, 19) zumindest auch aus Tantal gefertigt wird.

14. Verfahren nach einem der Ansprüche 9 bis 13, **dadurch gekennzeichnet, dass** das Anschlussteil (16, 17) zumindest auch aus einem Stahl gefertigt wird.

15. Verfahren nach einem der Ansprüche 9 bis 14, **dadurch gekennzeichnet, dass** am Messgerätgehäuse (2) ein das Messrohr (7, 8) zumindest auf einem Teilumfang umgebendes Messrohr-Stützelement (24, 25) angebracht wird, wobei das Messrohr-Stützelement (24, 25) auf mindestens 10 % seines Umfanges, vorzugsweise mindestens 20 % seines Umfanges, weiter vorzugsweise im Wesentlichen vollumfänglich stoffschlüssig und linienförmig mit dem Messgerätgehäuse (2) verbunden wird.
